**Europäisches Patentamt**

**European Patent Office**

**Office européen des brevets**

(11) Veröffentlichungsnummer: **0 012 407**
**B1**

(12) **EUROPÄISCHE PATENTSCHRIFT**

(51) Int. Cl.³: **C 04 B 21/06**

(45) Veröffentlichungstag der Patentschrift:
**28.10.81**

(21) Anmeldenummer: **79105027.1**

(22) Anmeldetag: **10.12.79**

(54) Verfahren zur Herstellung eines Porosierungsmittels.

(30) Priorität: **13.12.78 DE 2853709**

(43) Veröffentlichungstag der Anmeldung:
**25.06.80 Patentblatt 80/13**

(45) Bekanntmachung des Hinweises auf die Patenterteilung:
**28.10.81 Patentblatt 81/43**

(84) Benannte Vertragsstaaten:
**AT BE CH DE FR GB IT LU NL SE**

(56) Entgegenhaltungen:
**DE-B-1 141 933**
**DE-C-583 969**
**FR-A-1 283 693**
**GB-A-951 357**

(73) Patentinhaber: **Pormit GmbH Porosierungsmittel für Baustoffindustrie, Ringenkuhl 7, D-3506 Helsa II OT Wickenrode (DE)**

(72) Erfinder: **Krause, Heinz J., D-3437 Hessisch-Lichtenau (DE)**
Erfinder: **Hirz, Harri, Am Berg 8, D-6431 Hauneck 2 (DE)**

(74) Vertreter: **Planker, Karl-Josef, Dipl.-Phys., c/o BABCOCK- BSH AKTIENGESELLSCHAFT Postfach 4+6, D-4150 Krefeld 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

## Verfahren zur Herstellung eines Porosierungsmittels

Die Erfindung betrifft ein Verfahren zur Herstellung eines Porosierungsmittels für die Herstellung von porösen Formkörpern aus Lehm oder Ton.

In der Ziegelindustrie ist es lange bekannt, zwecks Verbesserung der Wärmedämmung der Ziegel dem Rohmaterial verdampfbare oder brennbare Porosierungsmittel zuzusetzen. Ein Aufsatz in der Zeitschrift «Ziegelindustrie» 9 (1978), Seiten 500 bis 526 enthält eine zusammenfassende Darstellung, in der mehr als dreissig Lieteraturstellen angegeben sind, die sich mit diesem Thema befassen.

Von den zahlreichen angegebenen Porosierungsmitteln haben nur wenige eine praktische Bedeutung erlangt. Wohl am weitesten verbreitet ist die Verwendung von Polystyrolschaum. Dieses Material wird in Form von Kugeln mit Durchmessern zwischen 1 und 4 mm zugesetzt.

Ein Feinkornanteil ist nicht vorhanden. Daher fehlt im fertigen Ziegel die Mikroporosität, die für die Erzielung hoher Wärmedämmwerte besonders wichtig ist. Die maximal zusetzbare Menge ist ziemlich eng begrenzt, weil bei zu hohem Anteil zwischen den entstehenden Löchern keine ausreichenden Stege verbleiben, so dass die Festigkeit niedrig und ungleichmässig wird. Daher ist es bei schweren Tonen kaum möglich, die geforderten Werte zu erreichen. Schon in der Anwärmzone wird das Polystyrolmaterial bei etwa 160°C vergast. Durch das entweichende Gas bilden sich in den Ziegeln unerwünschte, nach aussen offene Kanäle. Der an sich hohe Heizwert des Materials geht ungenutzt durch den Schornstein. Die Abgase belasten die Umwelt, wenn sie nicht in kostspieligen Nachverbrennungseinrichtungen beseitigt werden. Infolge der Kompressibilität des Materials neigen die Formlinge immer dazu, sich nach dem Pressen auszudehnen, zu verziehen oder rissig zu werden.

Eine gewisse Bedeutung hat auch der Zusatz von Sägemehl als Porosierungsmittel erhalten. Dieses hat aber stets eine faserige oder nadelige Struktur. Dadurch wird das Fliessverhalten beim Pressen gestört. Der Kraftbedarf nimmt erheblich zu. Die Verdichtung fällt ungleichmässig aus, und es bilden sich Schichtstrukturen, die die Festigkeit und die Frostbeständigkeit herabsetzen. Das Sägemehl wird im Ofen bei Temperatur über 500° verbrannt. Hierdurch wird die Ofenführung erschwert. Denn das Ausbrennen kann nur langsam erfolgen, weil einerseits der erforderliche Sauerstoff nur langsam eindiffundiert und andererseits ein zu schnelles Ausbrennen wegen des hohen Heizwertes eine zu grosse Wärmemenge freisetzt, die bei schnellem Ausbrennen zum Glühen und zur Zerstörung der Ziegelformlinge führt. Aus dem letzteren Grund ist überhaupt nur ein relativ geringer Zusatz zulässig und damit auch nur eine geringe Porosität erreichbar. Vielfach ist das Ausbrennen nur unvollständig. Es verbleiben mit Rückständen gefüllte schwarze Kerne, die eine Verschlechterung der Wärmedämmung und der Festigkeit bewirken, das Aussehen sehr beeinträchtigen und die Gefahr des Nachglühens bedingen.

Andere bekannte Zusätze, die nur wenig praktische Bedeutung erlangt haben, sind z.B. Torf, Kohlenstaub, Perlit, Getreidespelzen oder Flotationsberge. Hierbei treten im wesentlichen ähnliche Nachteile auf wie bei den zuerst beschriebenen Stoffen.

Bekannt ist auch schon die Verwendung von Kork. Dieser kommt aber wegen seines hohen Preises in der Praxis nur bei besonders hochwertigen Steinen für Spezialanwendung zur Verwendung.

Der Erfindung liegt die Aufgabe zugrunde, ein Verfahren zur Herstellung eines Porosierungsmittels anzugeben, das sich bei normaler Ofenführung ohne störende Rückstände, ohne Umweltbelästigung und ohne Überhitzung des Ofeneinsatzes unter Nutzung des innewohnenden Heizwertes ausbrennen lässt, das die Herstellung von Leichtziegeln mit hoher Festigkeit, guter Wärmedämmung und guter Masshaltigkeit ermöglicht und dabei billig und aus reichlich verfügbaren Ausgangsstoffen herstellbar ist.

Diese Aufgabe wird erfindungsgemäss durch die im Kennzeichen des Anspruchs 1 angegebenen Massnahmen gelöst.

Auf diese Weise wird ein brennbares Granulat mit lockerer, schaumartiger Struktur erzeugt. Dabei ist das Schüttvolumen der fertigen Schaumkohle etwa drei- bis viermal so gross wie das der Ausgangsstoffe. Dadurch ist der Heizwert gegenüber dem Massivkorn erheblich herabgesetzt. Der so verringerte Heizwert kommt beim Ausbrennen voll dem Ofenprozess zugute und ermöglicht eine beträchtliche Brennenergieersparnis. Er ist aber niedrig genug, um eine Materialschädigung durch Überhitzung zu vermeiden. Trotz der lockeren Struktur ist das Granulat mechanisch stabil und praktisch inkompressibel.

In den Ansprüchen 2 bis 4 sind bevorzugte Beispiele von geeigneten Ausgangsstoffen angegeben, die je nach den örtlichen Gegebenheiten gewählt werden können. Unter Holzmehl wird hierbei vorzugsweise Holzschliff verstanden, der eine mehr körnige als faserige Struktur aufweist, wobei die Korngrösse unter 1 mm liegen soll. Speziell durch die Wahl von Flugasche, die neben Kohle auch einen beträchtlichen Anteil von nichtbrennbaren Stoffen enthält, ergibt sich die Möglichkeit, den Heizwert beträchtlich zu reduzieren.

Eine weitere Möglichkeit zur Reduzierung des Heizwertes ist in Anspruch 5 angegeben. Dabei ist bemerkenswert, dass der Zusatz von unbehandeltem Perlit zum Rohton nach den Erfahrungen der Erfinder meistens nicht den gewünschten Effekt bringt, da die schaumartigen Perlitkörper beim Pressen zerbröckeln. Bettet man sie jedoch zusammen mit Kohlenstaub od.dgl. in Schaum ein, so bleiben sie stabil.

Gemäss Anspruch 6 kann erforderlichenfalls die Festigkeit des Granulats durch Zusätze verbessert werden, z.B. Gips, Wasserglas, Sulfitablauge, Stärke oder Dextrin.

Eine weitere Möglichkeit zur Reduzierung des Heizwertes besteht gemäss Anspruch 7 in dem Zusatz zerkleinerter Baumrinde. Diese hat infolge ihrer lockeren Struktur einen sehr niedrigen Heizwert. Sie fällt in der Holzindustrie beim Entrinden zur Verarbeitung bestimmter gefällter Stämme beliebiger Art in grossen Mengen als wertloser Abfall an und steht daher praktisch kostenlos zur Verfügung. Da die Rinde bisher kaum nutzbringend zu verwerten war, musste sie entweder auf Deponien abgelagert, einer Verbrennungsanlage zugeführt oder, um eine Schädigung des Bodens durch den hohen Gerbsäuregehalt möglichst zu vermeiden, grossflächig im Wald verteilt werden. In jedem Fall war die Entsorgung mit erheblichen Kosten verbunden.

Die im Anspruch 8 angegebenen Rindenarten zeichnen sich, bedingt durch den relativ schnellen Wuchs der Nadelhölzer, durch eine besonders lockere, porenreiche Struktur aus.

Durch die Massnahmen gemäss Anspruch 9 wird überraschenderweise erreicht, dass beim Mahlen und anschliessenden Trocknen der Rinde, die beim trockenen Vermahlen wegen ihrer meist faserigen Struktur zur Bildung länglicher Splitter neigt, eine annähernd kubische Körnung erreicht wird.

Das Versetzen mit Schaum erfolgt bei einer Variante der Erfindung gemäss Anspruch 10.

Bei einem Volumenverhältnis in dem Bereich gemäss Anspruch 11 ergibt sich eine Masse von günstiger Konsistenz für die weitere Verarbeitung. Das optimale Volumenverhältnis hängt von der Art der festen Ausgangsstoffe ab. Wenn diese schon weitgehend mit kapillar gebundener Feuchtigkeit gesättigt sind, genügt eine relativ geringe Schaummenge. Wenn aber die festen Stoffe noch viel Feuchtigkeit aufnehmen können, braucht man mehr Schaum.

Eine andere Möglichkeit zum Einbringen des Schaumes ist in Anspruch 12 angegeben. Hierbei wird das Schaummittel besonders intensiv in die Poren der Rinde bzw. des Holzmehls eingesaugt. Die in den Poren vorhandene Feuchtigkeit wird in Schaum verwandelt und dadurch verdrängt. Durch diesen spontanen Wasserentzug wird die Rinde besonders brüchig, so dass sie bei der Weiterbehandlung in kleine, würfelähnliche Teile zerfällt.

Gemäss Anspruch 13 kann dem Granulat noch Rinde und/oder Holzmehl nachträglich beigemischt werden. Dabei füllt die Rinde vor allem den Grobkornbereich auf, das Holzmehl den Feinkornbereich. Da Holzmehl einen relativ hohen, Rinde aber einen relativ niedrigen Heizwert hat, lässt sich durch die Wahl des Mischungsverhältnisses auch der Heizwert der Gesamtmischung in einem gewissen Bereich steuern. Durch diese Zusätze lässt sich ferner die Aufnahmefähigkeit des Porosierungsmittels für kapillare Feuchtigkeit steuern. Wenn eine sehr grosse Feuchte verfahrenstechnisch zweckmässig ist, wird ein grosser Anteil an Rinde zugesetzt. Eine normale Feuchte von z.B. 35% lässt sich aber auch mit reiner Schaumkohle realisieren, ohne dass die Rieselfähigkeit beeinträchtigt wird.

Eine bevorzugte Mischung ist in Anspruch 14 angegeben.

Durch das Mahlen gemäss Anspruch 15 wird die Korngrössenverteilung verbessert.

Gemäss Anspruch 16 soll die Korngrösse zweckmässig begrenzt sein, damit insbesondere bei Lochziegeln die Festigkeit der verbleibenden Stege nicht durch übergrosse Poren beeinträchtigt wird.

Durch Abstimmen der Korngrösse auf dichte Kugelpackung gemäss Anspruch 17 wird erreicht, dass auch die Poren in den Ziegeln eine dichte Packung bilden, ohne dass die Festigkeit allzu sehr beeinträchtigt wird. Wichtig ist dabei, dass auch ein Feinstkornanteil vorhanden ist, der für die besonders erwünschte Mikroporosität sorgt.

Gemäss Anspruch 18 liegt der Heizwert vorzugsweise in einem Bereich, der etwa $^{1}/_{10}$ bis $^{1}/_{2}$ des Heizwertes von geschütteter Braunkohle mittlerer Qualität beträgt. Die genaue Wahl des optimalen Heizwertes hängt vor allem von der Menge des erforderlichen Porosierungsmittels ab.

Bei dem erfindungsgemässen Verfahren geht man beispielsweise folgendermassen vor: Mit einem handelsüblichen Schaumgerät wird aus einem Gemisch von etwa 99% Wasser und etwa 1% Schaumkonzentrat (Tensid, Fettalkoholsulfat, Alkylsulfonat od.dgl.) ein stabiler, mikroporöser Schaum hergestellt, dessen Dichte nur etwa 30 bis 60 g/l beträgt. Hiervon getrennt wird eine Mischung aus folgenden Bestandteilen hergestellt:

8   Gewichtsteile Braunkohlenstaub
8   Gewichtsteile Holzschliff
27 Gewichtsteile Rinde
2,6 Gewichtsteile Perlitabfall
27 Gewichtsteile Sulfitablauge als Binder
26 Gewichtsteile Zusatzwasser.

Diese Mischung wird mit 1,4 Gewichtsteilen Schaum versetzt und z.B. in einem Betonmischer oder einem Doppelwellenmischer intensiv durchmischt. Dabei entsteht eine schaumige Masse von pastenartiger Konsistenz. Diese wird granuliert, indem sie z.B. mit einer Schnecke durch eine Lochplatte hindurchgedrückt wird. Die Stränge werden getrocknet und gemahlen. Das Mahlgut hat schon ein kontinuierliches Korngrössenspektrum, das einer dichten Packung schon ziemlich nahe kommen kann. Durch Absieben kann das Korngrössenspektrum weiter optimiert werden, so dass sich z.B. folgende Verteilung ergibt:

20 bis 40%     1,5 bis 3,5 mm
20 bis 40%     0,5 bis 1,5 mm
30 bis 50%     0   bis 0,2 mm.

Das so erhaltene Material hat auch in trockenem Zustand eine lockere, schaumige Struktur.

Die Körner sind stabil und nicht kompressibel. Das Material ist versand- und lagerfähig.

Die Feuchte des Materials wird so eingestellt, dass sie mit der Feuchte des Rohtons übereinstimmt, die für das Verpressen optimal ist. Diese liegt im allgemeinen zwischen 17 und 37%. Bei dieser Feuchte ist das Porosierungsmittel noch rieselfähig, da sein Wassergehalt infolge der porösen Struktur kapillar gebunden ist.

Bei leichten Rohtonen genügt ein Zusatz von 10 bis 20 Volumenprozent, um ein Scherbengewicht von maximal 1,45 kg/l zu erreichen. Bei schweren Tonen liegt die erforderliche Menge des Porosierungsmittels bei etwa 25 bis 40%. Diese Mengen lassen sich infolge der günstigen Kornform und Oberflächenbeschaffenheit des Porosierungsmittels leicht einmischen. Es ist sogar möglich, erheblich grössere Mengen zuzusetzen und auf diese Weise das Scherbengewicht weit unter den vorgeschriebenen Wert zu verkleinern, der mit herkömmlichen Porosierungsmitteln kaum zu erreichen ist.

Es hat sich gezeigt, dass sich das Gemisch mit erheblich reduziertem Kraftaufwand verpressen lässt. Bei einem Versuch wurde an der Presse eine Stromstärke von 40 A gemessen gegenüber 100 A bei Verwendung eines herkömmlichen Porosierungsmittels. Offensichtlich wird durch das Schaummittel das Fliessvermögen erheblich verbessert, so dass sich die Partikel mit geringster Reibung in die günstigste spannungsfreie Lage einordnen. Die unerwünschten Spiralstrukturen, die bekanntlich in der Schneckenpresse durch die Geschwindigkeitsdifferenz zwischen Strangmitte und Aussenbereich erzeugt werden, treten nicht mehr auf.

Beim Brennen der Ziegel wird das Porosierungsmittel während der normalen Brenndauer restlos verbrannt. Hierzu genügt der aus der Ofenatmosphäre eindiffundierende Sauerstoff in Verbindung mit dem in den geschäumten Körnern eingeschlossenen Sauerstoff. Das entstehende Kohlendioxid entweicht offenbar durch Diffusion. Jedenfalls werden bei den fertigen Ziegeln keine Gaskanäle beobachtet. Der Heizwert des Porosierungsmittels kommt voll dem Brennprozess zugute. Beträgt beispielsweise der Heizwert des Porosierungsmittels $8 \times 10^3$ kJ/kg und geht man von einem Zusatz von 30 Volumenprozent zum Rohton aus, so ergibt sich eine Wärmeersparnis von etwa $8 \times 10^5$ kJ/m$^3$ gelochte Ziegel.

In einem neutralen Laboratorium wurde eine Serie von Ziegeln, die unter Zusatz von 30% des nach der Erfindung hergestellten Porosierungsmittels in einer normalen Produktionsanlage gebrannt waren (Ziegel 1), mit Ziegeln verglichen, die auf der gleichen Anlage unter Zusatz von 50 Volumenprozent Polystyrolschaumkugeln hergestellt waren (Ziegel 2). Es ergaben sich folgende Mittelwerte:

|  | Ziegel 1 | Ziegel 2 |
|---|---|---|
| Raumdichte g/cm$^3$ | 1,49 | 1,47 |
| Wasseraufnahme % | 32,7 | 32,9 |
| Scheinbare Porosität | 47,0 | 48,3 |
| Wärmeleitfähigkeit bei 20 °C, w/mK | 0,482 | 0,468 |

Die Wärmeleitfähigkeit wurde nach dem in der Norm DIN 51 048 vorgeschriebenen Heissdraht-Verfahren ermittelt. Das Heissdraht-Verfahren erbringt erfahrungsgemäss gegenüber den bisher in Deutschland zumeist verwendeten kalorimetrischen Verfahren (z.B. nach ASTM) oder gegenüber dem Vergleichsverfahren um etwa 30–50% höhere Werte. Dies ist bei einem Vergleich der angegebenen Ergebnisse mit den in der einschlägigen Fachliteratur vorliegenden Werten zu beachten.

In bezug auf diese Eigenschaften stimmen die Werte bei beiden Ziegelarten also praktisch überein. Gemäss amtlichem Prüfungszeugnis wurde jedoch für die Ziegel 1 eine mittlere Druckfestigkeit von 11,3 N/mm² festgestellt gegenüber 7,5 N/mm² bei üblichen Ziegeln, die unter Verwendung von geschäumtem Polystyrol hergestellt sind.

Das Verfahren lässt sich im Rahmen der Ansprüche in vielfacher Weise variieren. So kann z.B statt Braunkohlenstaub natürlich auch Steinkohlenstaub verwendet werden, wenn dieser leichter verfügbar ist. Es steht nichts im Wege, den Kohlenanteil im Gesamtgemisch gegenüber dem angegebenen Beispiel erheblich zu vergrössern.

Das Mischen der festen Ausgangsstoffe mit dem Schaum ist ohne besondere Probleme und kann in beliebigen Mischern durchgeführt werden. Durch gezieltes längeres Mischen lässt sich meistens auch erreichen, dass die Masse bröselig wird, so dass sich ein zusätzlicher Arbeitsgang für das Granulieren erübrigt. Die Packungsdichte und damit der maximale Porosierungsgrad der Ziegel lässt sich durch Absieben einstellen.

Abweichend von der Verfahrensweise des angegebenen Ausführungsbeispiels kann die Feuchte des Porosierungsmittels vor dem Zumischen zum Rohton auch höher oder niedriger eingestellt werden als die Feuchte des Rohtons. Dies gilt, wenn der Rohton feuchter oder trockener ist, als es für das Verpressen optimal ist. Die Feuchte des Porosierungsmittels wird dann so gewählt, dass das Gesamtgemisch auf den vorgeschriebenen Wassergehalt kommt.

## Patentansprüche

1. Verfahren zur Herstellung eines Porosierungsmittels für die Herstellung von porösen Formkörpern aus Lehm oder Ton, dadurch gekennzeichnet, dass ein brennbares pulverförmiges bis feinkörniges Material mit Schaum versetzt und granuliert wird.

2. Verfahren nach Anspruch 1, dadurch gekennzeichnet, dass als brennbares Material Kohlenstaub verwendet wird.

3. Verfahren nach Anspruch 1 oder 2, gekennzeichnet durch die Verwendung von Holzmehl.

4. Verfahren nach einem der Ansprüche 1 bis 3, gekennzeichnet durch die Verwendung von Flugasche.

5. Verfahren nach einem der Ansprüche 1 bis 4, gekennzeichnet durch den Zusatz von Perlit.

6. Verfahren nach einem der Ansprüche 1 bis 5, gekennzeichnet durch den Zusatz von Bindemitteln.

7. Verfahren nach einem der Ansprüche 1 bis 6, gekennzeichnet durch den Zusatz von zerkleinerter Baumrinde.

8. Verfahren nach Anspruch 7, dadurch gekennzeichnet, dass die Rinde von Tannen, Fichten oder Kiefern zugesetzt wird.

9. Verfahren nach Anspruch 7 oder 8, dadurch gekennzeichnet, dass die Baumrinde nass vermahlen wird.

10. Verfahren nach einem der Ansprüche 1 bis 9, dadurch gekennzeichnet, dass die festen Rohstoffe zunächst miteinander vermischt und dann gemeinsam mit Schaum versetzt werden.

11. Verfahren nach Anspruch 10, dadurch gekennzeichnet, dass das Volumenverhältnis zwischen festen Rohstoffen und Schaum zwischen 2:1 und 1:2 liegt.

12. Verfahren nach Anspruch 3, 7 oder 8, dadurch gekennzeichnet, dass die Baumrinde und/oder das Holzmehl im nassen Zustand mit Schaummittel durchsetzt werden und dass anschliessend die übrigen Feststoffe zugemischt werden.

13. Verfahren nach einem der Ansprüche 1 bis 12, dadurch gekennzeichnet, dass dem fertigen Granulat noch zerkleinerte Baumrinde und/oder Holzmehl beigemischt wird.

14. Verfahren nach einem der Ansprüche 7 bis 11, gekennzeichnet durch folgende Mischung (in Gewichtsprozent):

5 bis 30% Braunkohlenstaub
5 bis 20% Holzmehl
20 bis 30% gemahlene Baumrinde
2 bis 5% Perlite
15 bis 30% Sulfitablauge
15 bis 30% Zusatzwasser
1 bis 2% Schaum,

wobei der Schaum aus 98 bis 99% Wasser, 1 bis 2% Tensid besteht.

15. Verfahren nach einem der Ansprüche 1 bis 14, dadurch gekennzeichnet, dass das Granulat gemahlen wird.

16. Verfahren nach einem der Ansprüche 1 bis 15, dadurch gekennzeichnet, dass die maximale Korngrösse durch Absieben auf 5 mm begrenzt wird.

17. Verfahren nach Anspruch 16, dadurch gekennzeichnet, dass das Korngrössenspektrum auf dichteste Packung abgestimmt wird.

18. Verfahren nach einem der Ansprüche 1 bis 17, dadurch gekennzeichnet, dass der Heizwert in einem Bereich von $1-6 \cdot 10^6$ kJ/m$^3$, vorzugsweise $1-4 \cdot 10^6$ kJ/m$^3$, gehalten wird, bezogen auf das geschüttete Material.

## Claims

1. Process for the production of a porosifier to be used for the production of porous shaped blocks of brick clay, characterized by compounding a combustile material of pulverulent to fine particulate nature with foam and then granulating it.

2. Process in accordance with claim 1, characterized by using coal dust as a combustible material.

3. Process in accordance with claim 1 or 2, characterized by using wood flour.

4. Process in accordance with one of the claims 1 to 3, characterized by using fly ash.

5. Process in accordance with one of the claims 1 to 4, characterized by the addition of perlite.

6. Process in accordance with one of the claims 1 to 5, characterized by the addition of binding agents.

7. Process in accordance with one of the claims 1 to 6, characterized by the addition of disintegrated bark.

8. Process in accordance with claim 7, characterized by adding the bark of pine, fir or spruce.

9. Process in accordance with claim 7 or 8, characterized by grinding the bark in wet ground condition.

10. Process in accordance with one of the claims 1 to 9, characterized by first mixing the solid raw materials and then adding foam to the mixture.

11. Process in accordance with claim 10, characerized by having a ratio by volume between the solid raw materials and the foam of 2:1 and 1:2.

12. Process in accordance with claim 3, 7 or 8, characterized by first mixing the bark and/or wood flour in wet condition with the foaming agent and then adding the remaining solids.

13. Process in accordance with one of the claims 1 to 12, characterized by adding the ground bark and/or wood flour to the finished granulated product.

14. Process in accordance with one of the claims 7 to 11, characterized by the following mixing ratio (per cent by weight):

5–30% lignite dust
5–20% wood flour
20–50% ground bark
2–5% perlite
15–30% sulphite liquor
15–30% water
1–2% foam

the foam consisting of 98–99% water and 1–2% tenside.

15. Process in accordance with one of the claims 1 to 14, characterized by grinding the granulated product.

16. Process in accordance with one of the claims 1 to 15, characterized by limiting the maximum grain size to 5 mm by passing the product through a screen.

17. Process in accordance with claim 16, characterized by specifying the particle-size range to achieve the highest packing possible.

18. Process in accordance with one of the claims 1 to 17, characterized by keeping the calorific value within the range of $1–6 \times 10^6$ kJ/m$^3$, preferably within $1–4 \times 10^6$ kJ/m$^3$ with reference to the loosely packed material.

**Revendications**

1. Procédé de production d'un agent porogène pour la fabrication d'objets poreux conformés en de la terre glaise ou de l'argile, caractérisé en ce que l'on mélange une matière combustible pulvérulente à finement grenue avec de la mousse et l'on granule.

2. Procédé selon la revendication 1, caractérisé en ce qu'on utilise comme matière combustible de la poussière de charbon.

3. Procédé selon la revendication 1 ou 2, caractérisé en ce qu'on utilise de la farine de bois.

4. Procédé selon l'une des revendications 1 à 3, caractérisé en ce qu'on utilise de la cendre volante.

5. Procédé selon l'une des revendications 1 à 4, caractérisé en ce que l'on ajoute de la perlite.

6. Procédé selon l'une des revendications 1 à 5, caractérisé en ce que l'on ajoute des liants.

7. Procédé selon l'une des revendications 1 à 6, caractérisé en ce que l'on ajoute de l'écorce d'arbre moulue.

8. Procédé selon la revendication 7, caractérisé en ce que l'on ajoute de l'écorce de sapin, d'épicéa ou de pin sylvestre.

9. Procédé selon la revendication 7 ou 8, caractérisé en ce que l'on broie au mouillé l'écorce d'arbre.

10. Procédé selon l'une des revendications 1 à 9, caractérisé en ce que l'on mélange tout d'abord les matières premières solides et l'on incorpore ensuite de la mousse à l'ensemble obtenu.

11. Procédé selon la revendication 10, caractérisé en ce que le rapport volumétrique entre les matières premières solides et la mousse se situe entre 2:1 et 1:2.

12. Procédé selon la revendication 3, 7 ou 8, caractérisé en ce que l'écorce d'arbre et/ou la farine de bois sont imprégnées à l'état humide par de l'agent de moussage et en ce que les autres matières solides sont ensuite incorporées par mélange.

13. Procédé selon l'une des revendications 1 à 12, caractérisé en ce que l'on ajoute encore aux granulés terminés de l'écorce de bois broyée et/ou de la farine de bois.

14. Procédé selon l'une des revendications 7 à 11, caractérisé par la composition suivante de mélange (en pourcentage pondéral):

5 à 30% de poussière de lignits
5 à 20% de farine de bois
20 à 50% d'écorce d'arbre broyée
2 à 5% de perlite
15 à 30% de lessive sulfitique résiduaire
15 à 30% d'eau supplémentaire
1 à 2% de mousse,

la mousse consistant en 98 à 99% d'eau et 1 à 2% d'un tensio-actif.

15. Procédé selon l'une des revendications 1 à 14, caractérisé en ce que les granulés sont broyés.

16. Procédé selon l'une des revendications 1 à 15, caractérisé en ce qu'on limite à 5 mm, par tamisage, la grosseur maximale des grains.

17. Procédé selon la revendication 16, caractérisé en ce qu'on détermine le spectre de grosseur des grains d'après le tassement le plus dense.

18. Procédé selon l'une des revendications 1 à 17, caractérisé en ce qu'on maintient le pouvoir calorifique dans un domaine de 1 à $6 \times 10^6$ kJ/m$^3$, de préférence 1 à $4 \times 10^6$ kJ/m$^3$, par rapport à la matière déversée.